# EUROPEAN PATENT APPLICATION

(11) **EP 1 345 134 A2**
(43) Date of publication of application: **17.09.2003**
(21) Application number: 03004990.2
(22) Date of filing: 11.03.2003
(51) Int. Cl.: G06F 17/30

(54) **Information searching system**

(30) Priority: 15.03.2002 JP 2002071417
(71) Applicant: YAMAHA CORPORATION, Hamamatsu-shi, Shizuoka-ken 430-8650 (JP)
(72) Inventor: Wakita, Masahiko, Hamamatsu-shi, Shizuoka-ken, 430-8650 (JP)
(74) Representative: Kehl, Günther, Dipl.-Phys.

(57) **Abstract**

In an information searching system, a searching server presents a plurality of icons IC on an "icon search" screen A of a user terminal upon a request via a communication network. Then, the server receives a selection of a desired icon ICs from the user terminal. Thereafter, in accordance with the selected icon, contents associated with the selected icon is searched, and information CP related to the searched contents are presented on an "icon answer" screen B of the user terminal to let the user select a desired contents from the displayed guide information CP. The information searching system can use the icons for searching, and a user can designate a searching condition intuitively. Therefore, information searching and contents providing can be executed efficiently.

## Description

### CROSS REFERENCE TO RELATED APPLICATION

This application is based on Japanese Patent Application 2002-071417, filed on March 15, 2002, the entire contents of which are incorporated herein by reference.

### BACKGROUND OF THE INVENTION

### A) FIELD OF THE INVENTION

This invention relates to an information searching system that can promote information guidance according to user's intuitive understanding about contents provided via a communication network such as the Internet.

### B) DESCRIPTION OF THE RELATED ART

Searching various kinds of information relating to contents and browsing and purchasing the contents such as a picture, music, a sound voice, a software program and the like are generally performed with a service provided by a server to be accessed via a communication network. In a case that the contents on the network as the above are searched, conventionally, an information presentation and a designation of a searching condition are executed based on text information.

Since an user often does not recognize a keyword that exactly matches a target to be searched in a case of searching software contents such as a movie and music, for example, in a case of "to search a grooving music" in music information, it is difficult to specify a condition that agree with this kind of abstract request.

Also, in the conventional method, since an information presentation and designation of searching condition are executed based on text information, it is difficult to understand easily whether presented information and the designated searching condition are corresponding to a concept that the user really intended or not.

### SUMMARY OF THE INVENTION

It is an object of the present invention to provide a information searching system that makes a user able to intuitively understand instruction from a server side relating to information that is an vague abstract concept and searching conditions and that can efficiently promote services such as information searching and contents providing.

According to one aspect of the present invention, there is provided an information searching method for an information searching apparatus connected to a user terminal via a communication network, the information searching method comprising the steps of: (a) presenting a plurality of icons to the user terminal; (b) receiving a selection of an icon from the plurality of icons by a user from the user terminal; (c) searching contents associated with the selected icon in accordance with the selected icon; and (d) guiding the contents by providing information relating to the searched contents to the user terminal.

According to the present invention, an information searching apparatus (SV) is connected for communicating with user terminals (UT; UTa, UTb,...) via a communication network (CN) and presents plurality of icons (IC) (S1) upon a request (C1) for providing information from the user terminal (UT). When a desired icon (ICs) is selected from the presented icons (IC) on the user terminal (UT) side, the information searching apparatus (SV) accepts the selection of the icon (ICs) from the user terminal (UT) (S2). Then, information (CP) relating to the searched contents is presented to the user terminal (UT) based on selected icon (ICs) information.

In the present invention, since a searching target and the icon (IC) are made to perform correlation with the contents, and using the icon (IC) known as pictograph information as searching conditions, a user who uses the user terminal (UT) can set up searching conditions by designating a desired icon (ICs) alternatively based on the intuition received from the presented icons. That is, since the icon (IC) that can express an ambiguous concept can be designated as searching conditions, a setup of searching conditions is performed and the designated information can be efficiently searched only with designating the desired icon (ICs) intuitively even if a target that a user is going to search is not grasped correctly.

Also, in the present invention, since guidance to the user for searching conditions is supported by presenting an icon (IC) and footnote information (CM) relating to the icon (IC) at a time of presenting the icon (IC), the user can grasp searching conditions accurately. Also, since each contents is made to be related with an icon or icons (IC, IC1 and IC2), a searching result can be easily obtained also from the contents relating over plurality of searching conditions by designating arbitrary icons intuitively by the user.

Further, contents can be applied to sound information such as music and sound, picture information such as a moving picture and a still picture, programs and combination of the above informations. Also, as a user terminal, not only a mobile communication terminal such as a cellular phone and an information processing apparatus such as a personal computer (PC) are used, but also an apparatus with arbitrary forms can be applied if it is a communication terminal that can use the contents. For example, a game machine that is specialized in a specific information usage, and an information processing apparatus only for the purchased contents may be applied.

### BRIEF DESCRIPTION OF THE DRAWINGS

FIG. 1 is a diagram of a schematic image structure of a whole information searching system according to an embodiment of the present invention.
FIG. 2 is a block diagram showing an example of a hardware structure of a searching server according to the embodiment of the present invention.
FIG. 3 is a diagram showing an example of a database structure in the searching server according to the embodiment of the present invention.
FIG. 4 is one part of a flow chart showing an example of a processing operation in the information searching system according to the embodiment of the present invention.
FIG. 5 is another part of the flow chart showing the example of the processing operation in the information searching system according to the embodiment of the present invention.
FIGs. 6 show one example of transition of a user terminal screen in the information searching system according to the embodiment of the present invention.
FIGs. 7 show another example of the user terminal screen in the information searching system according to the embodiment of the present invention.

### DETAILED DESCRIPTION OF THE PREFERRED EMBODIMENTS

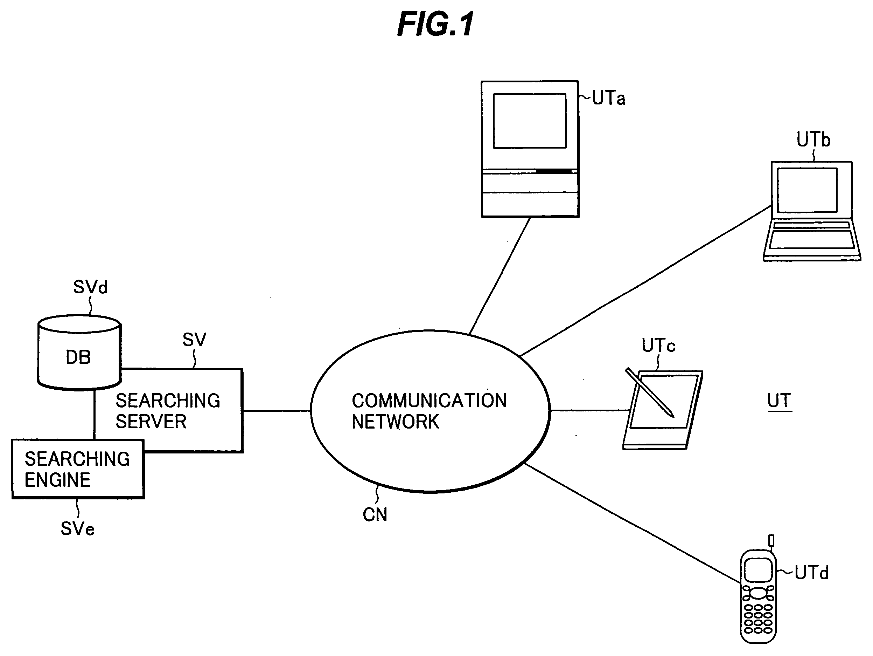

FIG. 1 shows a diagram of a schematic image structure of a whole information searching system according to an embodiment of the present invention. In this example, the system is consisted of a searching server SV, a communication network CN such as the Internet, a large number of user terminals UTa, UTb, UTc, UTd ... and so on. The user terminals UTa, UTb, UTc, UTd, ...access to the searching server SV via the communication network CN and receive services such as information searching and contents offering by communicating with the server SV. Further, in an explanation in the below, the user terminals UTa, UTb, UTc, UTd ...are presented with a symbol "UT" as a representative.

Various kinds of information processing terminals, each of which are equipped with a communication function, are used as the user terminals UT. For example, as shown in the drawing, a game machine and an information processing terminal such as various kinds of software information guidance device called a "KIOSK" terminal can be used other than a normal personal computer (PC) UTa, a note type PC (a notebook PC) UTb, a personal digital assistant (PDA) UTc, a mobile communication terminal UTd such as a cellular phone and the like.

A searching server SV equips with a database (DB) SVd and a searching engine (a searching operation executing unit in the information searching program) SVe and receives request from each user terminal UT. Then, the searching server SV extracts necessary information from various kinds of data files stored in the database SVd by the searching engine SVe and provides services such as information searching and contents offering that agree with the request of the user to each user terminal UT.

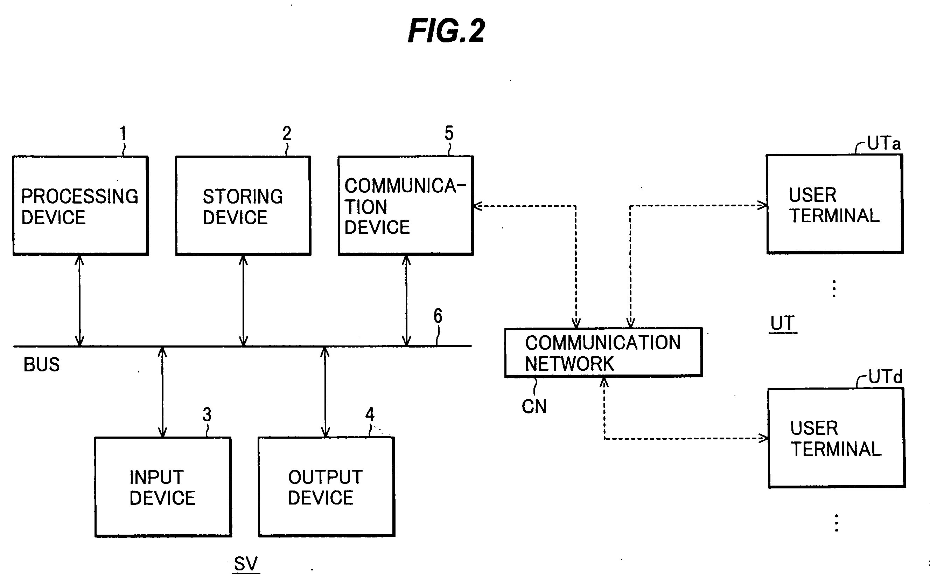

FIG. 2 is a block diagram showing an example of a hardware structure of a searching server according to the embodiment of the present invention. The server can be consisted of, for example, a PC, and equips with a processing device 1, a storage device 2, an input device 3, an output device 4 and a communication device 5 as shown in FIG. 2, and these devices 1 to 5 are connected with each other via a bus 6.

A processing device 1 equips with a central processing unit (CPU) that controls the whole searching server SV and executes processes relating to a communication control with the user terminal UT and contents offering in accordance with a predetermined control program. A storage device 2 is consisted of a read only memory (ROM) that stores various control program included information searching program (searching engine) SVe and data for control, a random access memory (RAM) that works as a main memory and an external storage device that stores various kinds of data. A database SVd storing searching information and contents is built in the external storage device. By the control of the CPU, a searching engine SVe is driven according to the information searching program, and information searching can be performed with the database SVd.

Further, the external storage device includes not only a hard disk drive (HDD), but also a flexible disk (FD), a magneto optical (MO) disk, a compact disc (CD), a digital versatile disc (DVD) a storage medium such as a semiconductor storage device and their driving device and can store various kinds of data and programs.

The input device 3 equips with an operating device and an operation detecting device such as a keyboard, a pointing device like a mouse, and the output device 4 equips with an output control device, output device (a display such as a CRT, a LCD and a LED, a sound source, a sound system and the like).

The communication device 5 is a communication interface (I/F) such as a modem, a LAN card corresponding to communication protocol for transmitting various kinds of data and is connected for communicating with other information processing terminal (the user terminal) UT via the communication network CN to receive various kinds of information. An arbitral method, either wired or wireless, can be used for the communication I/F depending on necessity. For example, in a case of wired method, Ethernet (trademark), a USB and an IEEE1394 can be used, and in a case of wireless method, Bluetooth (trademark) and an IEEE802.11 can be used. An arbitral means can be adopted depending on necessity.

Moreover, in this example, database SVd containing a searching target and searching engine SVe are included in the searching server SV. These database SVd and searching engine SVe may be hardware independent from the PC. Also, the above-described input device 3 and display output device 4 is not indispensable as the searching server SV. The input device 3 and the output device 4 can be omitted if it only performs as a service providing server, and a server machine of exclusive usage can be used.

Each of the user terminals UT (UTa, UTb, UTc, UTd, ...) can also have the same structure as the searching server SV. In the case of the user terminals UT, for example, a sound input device to input voice of a user such as a microphone in addition to the operating device as an input device 3, and a sound output device for sounding music and voice in addition to the display output device as an output device 4.

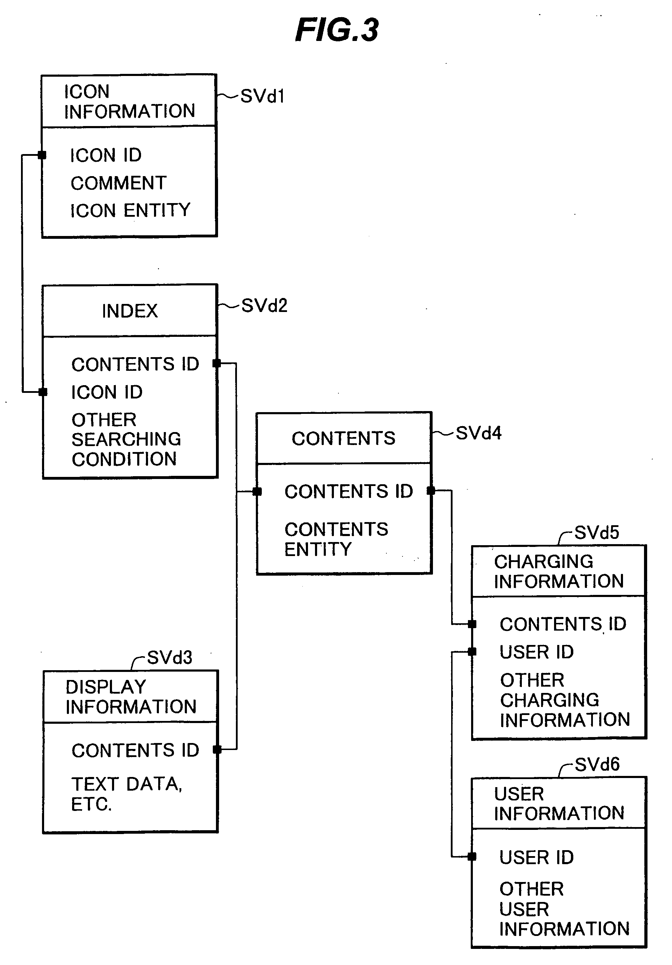

FIG. 3 is a diagram showing an example of a database structure in the searching server according to the embodiment of the present invention. In the searching server SV of this information searching system, plural kids of information relating to providable contents are stored in each data file in the database SVd. Each of these information includes at least icon information, index for searching, display information for displaying contents outline and purchase amount to the user terminal UT, contents (an entity), charging information for executing a price settlement to contents offering, user information to record information relating to each user who uses one of the user terminals UT and the like, and they are stored in corresponding data files SVd1 to SVd6.

Each icon information is consisted of an icon ID to each icon, a comment relating to the icon, an icon entity stored with a still picture data such as a bitmap and the like, and they are stored in the icon information file SVd1. Each icon information is used for specifying a searching target, and an icon picture (IC) represented by each icon entity is a design that the user can easily grasp the searching target with an intuitive image. Also, kinds of icons represent a character of contents group extracted from searching without being restricted by a systematic classifying rule. For example, a category, an atmosphere (mood, emotional tone), old and new and a purpose can be set arbitrarily and randomly. Therefore, the same contents can be associated with plurality of icons at the same time.

Each index is consisted of contents ID and icon ID corresponding contents and icon and other searching condition data and stored in the index information file SVd2. Each display information is consisted of a contents ID of the corresponding contents, a footnote comment (footnote information CM) of the contents, a guidance (guide information CP), display contents information representing an explanation with text data and stored in the display information file SVd3. Therefore, the icon information and the index information are linked by the icon ID, and index and display information are linked by the contents ID.

Each contents (an entity) is that the contents ID is added with each contents entity, stored in the contents file SVd4 and linked by the index or the display information and the contents ID. The charging information is consisted of the contents, the contents ID of the user terminal UT, a user ID and other charging information representing charging contents and stored in the charging information file SVd5. The charging information is linked with the corresponding contents (an entity) by the contents ID and linked with user information by the user ID. The user information is consisted of user ID and other user information such as information of the user terminal UT and information relating to the user and stored in the user information file SVd6.

In the information searching system according to the embodiment of the present invention, it is arranged to efficiently execute various kinds of information guidance relating to contents provided from the searching server. For example, the searching server presents plurality of the icons corresponding to a request from the user terminal, receives an icon selection from the user and operates to present information relating to contents related to the selected icon.

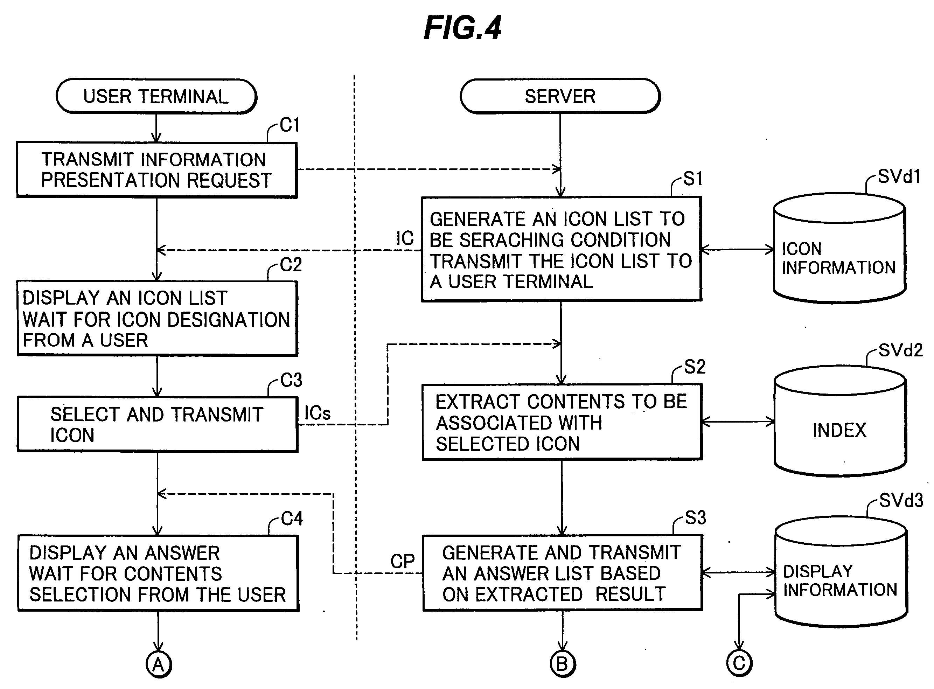

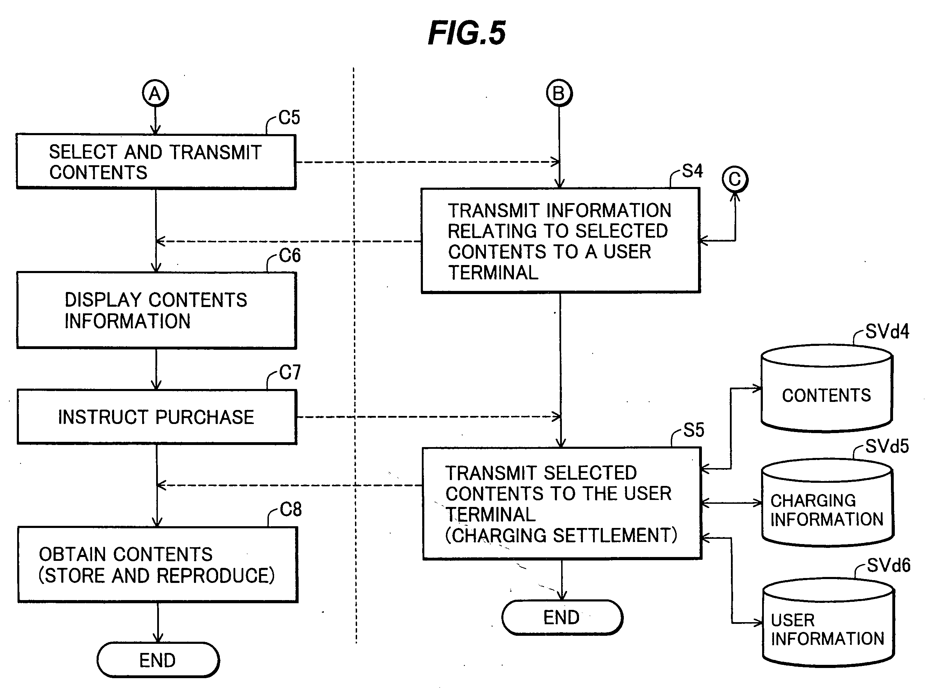

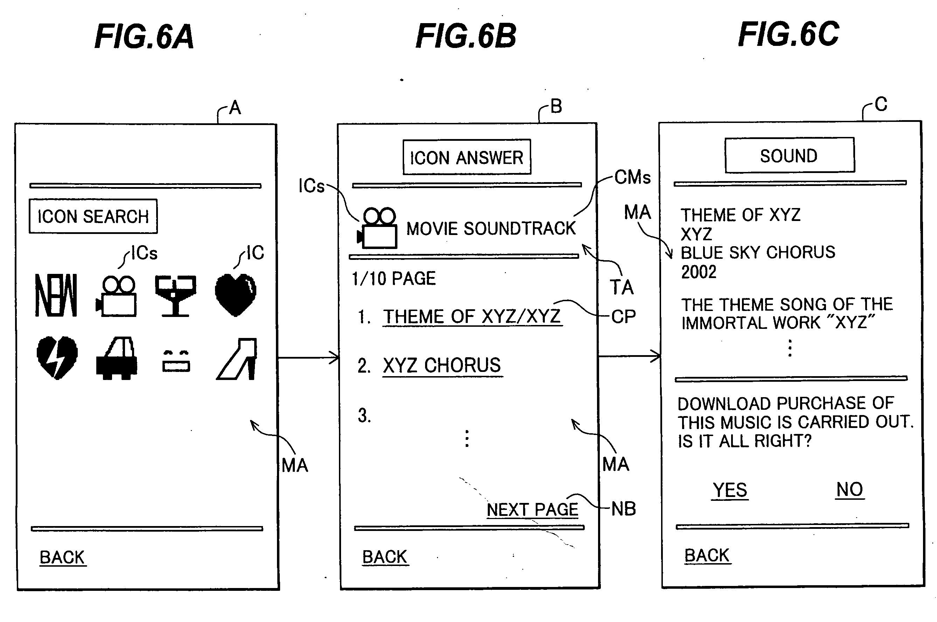

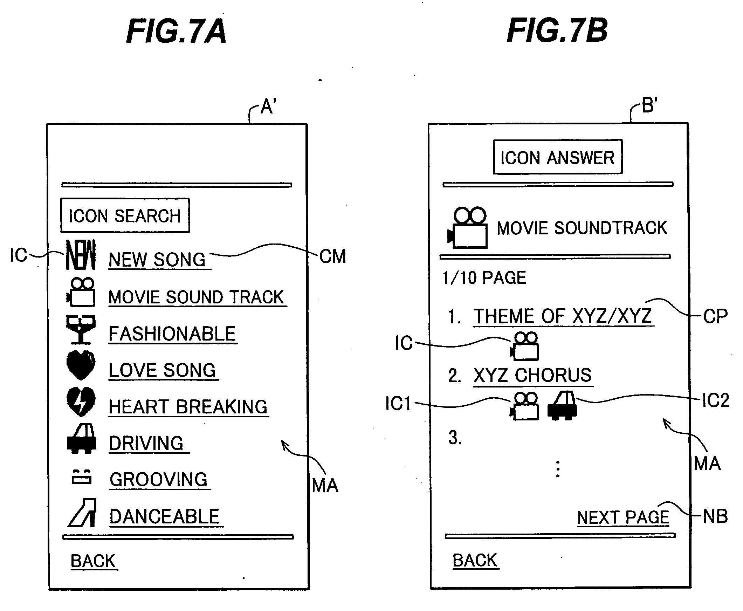

FIGs. 4 and 5 together show a flow chart showing an example of a processing operation executed by the information searching system according to the embodiment of the present invention. FIGs. 6 and 7 are examples of screen transitions of the user terminal screens in the information searching system according to the embodiment of the present invention. Further, in each screen example in FIGs. 6 and 7, an underlined text represents that a hyper-link or a certain action is associated with the text. For example, a "return" display is stratificationaly returned to the upper screen. Also, selection of a series of letters and icons on each screen is executed by a cursor key or a pointing device (the input device 3).

Here, an outline of the information searching according to the present invention is explained with reference to FIG. 6. In this information searching system, when the user terminals UT (UTa, UTb, UTc, UTd, ...) access to the searching server SV via the communication network CN, the searching server SV proceeds the information guidance using the icon IC relating to providable contents and proceeds information search by a process that the user who uses one of the user terminals UT can intuitively understand. First, the searching server SV presents plurality of the icons IC on an "icon search" screen A of one of the user terminals UT that requests for information providing from the user terminal UT. Next, when a desired icon ICs is selected from the icons IC that are presented on the screen A in the user terminal, the searching server SV accepts selection of this icon ICs. Then, the searching server SV searches contents associated with the icon ICs based on information of the selected icon ICs, and presents guidance information CP relating to searched contents on an "icon answer" screen B in the user terminal UT. Then, the desired contents from the contents guidance information CP that is presented on the screen B is selected by the user terminal UT.

More details are explained below. In FIG. 4,when the information searching program is booted up by a predetermined key operation with the input device 3 by the user on the user terminal UT side, a menu screen (not shown in the drawings) is displayed on a display (an output device 4) in a display output device. Moreover, when a request for presentation of readable or purchasable information is transmitted (Step C1) by operating the menu screen by the operation key or the pointing device 3, the searching server SV prepares a list of the icons IC that can be searching conditions for the request of the user based on the icon information stored in the icon information file SVd1. Then, the information (IC) of the prepared icon list is transmitted to the user terminal UT (Step S1).

Corresponding to the above process, the user terminal UT displays the icon list on a display (the output device 4) according to the received icon information (IC) transmitted from the searching server SV, and waits a designation of desired contents by user operation (Step C2). This icon list indicates the icons IC with designs that are easy to imagine the search target by the user by list, and for example, as shown in FIG. 6A, it is displayed on a main display area MA in a screen A named as an "icon search" screen.

The icon list in the screen A in FIG. 6A is an example of a case of a requesting information search and provide of music contents from the searching server SV. As shown in the drawing, each icon IC expresses a newly released song, music from a soundtrack of a movie, a cool music, a love song, a bluesy music for curing a broken heart, a music suitable for driving a car, a grooving music, a music which has a rhythm in a mood like when dancing and the like by pictures with which the user can imagine intuitively.

On the user terminal UT side, when the user applies a cursor on a desired icon (for example, a "soundtrack music" icon) ICs and executes an input operation such as a key operation to the displayed "icon search" screen A, the user terminal UT transmits that the icon ICs is selected to the searching server SV corresponding to this operation and instructs searching conditions corresponding to the icon ICs to the searching server SV (Step C3). Further, when a "back" button in a bottom of the screen is operated, the first transmission request is cancelled, and the screen is back to the first menu screen. Also, information of canceling the request is transmitted to the searching server SV, and the searching server SV confirms that the user terminal UT has been back to the first step (Step C1).

When the icon ICs is selected from the "icon search" screen A in the user terminal UT, the searching server SV extracts the contents ID associated with the selected icon referring the index file SVd2 (Step S2). Next, the searching server SV extracts the guidance information CP corresponding to the contents agreed with search conditions instructed from the user terminal UT side referring to the display information file SVd3 based on the extracted result of the contents ID , and prepares an answer list gathering these guidance information CP. Then, the searching server SV transmits information (CP) of the prepared answer list to the user terminal UT (Step S3).

Further, the search is executed on the server side, and as a result of the process to extract contents that is applicable to the designated icon ICs, when the number of hit is "0", "NOT FOUND" message is created other than the answer list to be transmitted to the user terminal UT. In this case, this message is displayed overlaying on the "icon search" screen A in the user terminal UT. When an "OK" key is operated, the message is deleted and the searching server SV receives the "OK" operation information from the user terminal UT. Then, the searching server SV confirms that the user terminal UT returns to the first step (Step C2) in the "icon search" screen A.

When the answer list is prepared, the user terminal UT displays the answer list gathered each contents guidance information CP on a screen named "icon answer" screen on the display 4 and waits for a contents selection operation by the user (Step C4).

FIG. 6B shows an example of an "icon answer" screen B, contents guidance information CP is displayed by the list according to the guidance information of all the contents that satisfy the searching conditions in a main display area MA in the screen B. For example, in the "icon searching" screen A relating to music contents in FIG. 6A, when an icon IC symbolizing a soundtrack music is selected by the user operation, as in FIG. 6B, the guidance information CP of the contents that is agreed with the searching conditions of the icon ICs is displayed by a list with a reference number ("1", "2", "3", ...) in an order of a title, a performer in the main display area MA that is a main part of the answer list.

Also, in the "icon answer" screen B, a group title display unit TA is provided in an upper part of the main display area MA as in FIG. 6B, and the icon ICs selected in the "icon search" screen A and the footnote comment CMs relating to the icon ICs are displayed. This footnote comment is based on the footnote information corresponding to the selected icon ICs, and the user can easily confirm the instructed searching conditions by the representing characters (for example, old and new, a category, an atmosphere, a purpose and the like) of contents agreed with the searching conditions that the icon ICs symbolizes directly. In the example shown in FIG. 6B, a "MOVIE soundtrack" is displayed as the footnote comment CMs of the "soundtrack music" icon ICs.

Further, when the main display area MA of the "icon answer" screen B cannot display the whole contents guiding information CP, a list of the contents guiding information CP can be scrolled by operating the scroll key. The list of the contents guiding information CP can be divided into pages at a predetermined amount of the information for displaying it by one page at a time instead of scrolling the list. Also, both scrolling and displaying one-page-at-a-time may be used interchangeably. Further, in case of the one-page-at-a-time display, for turning the pages, page turning units (or buttons) such as "previous page" and "next page" are displayed. For example, in an example of the first page (1/10 page) shown in FIG. 6B, the next page turning unit (or the button) NB is displayed to be operated.

In the user terminal UT side, when the user executes input operation for the desired contents guidance information CP from the answer list in the "icon answer" screen B by the key operation of the reference number or applying the cursor on an information display part, the user terminal UT corresponds to this operation and transmits the contents selection information that represents that the contents are selected to the searching server SV (FIG. 5: Step C5).

Further, when a "BACK" button in a bottom of the "icon answer" screen B is operated, the instruction for searching conditions by the icon ICs is cancelled and display is back to the original "icon search" screen A. The searching server SV receives the instruction cancellation information of the searching conditions and confirms that the user terminal UT is back to the displaying step (Step C2) of the "icon search" screen A.

When the contents selection information is transmitted from the user terminal UT, the contents information relating to a contents explanation of the selected contents is extracted by referring the display information file SVd2 based on the contents ID corresponding to contents selection information from the user terminal UT, and extracted contents information is transmitted to the user terminal UT (Step 4).

The user terminal UT displays contents explanation of the contents selected in the user terminal UT on a contents explanation screen C in the above display 4 based on contents information transmitted from the searching server SV (Step C6). This contents explanation screen C is constituted to display, for example, as shown in FIG. 6C, that contents selected in the "icon answer" screen B in FIG. 6B is "sound", that is sound information, on a top, and a simple explanation following to item data such as a title, a main performer, a performance assistant, a produced year, a songwriter, a composer and purchase amount.

Each of the users can download and purchase the contents selected by themselves by using this contents explanation screen C. Therefore, on the lower part of the main display area MA on the contents explanation screen C, "YES" or "NO" buttons asking whether the contents is downloaded to the user terminal UT or not are displayed. When the user, for example, inputs information to instruct purchase of the selected contents in the user terminal UT by operating the "YES" button, the user terminal UT transmits this purchase instruction information to the searching server SV (Step C7).

Further, when the "NO" button or the "BACK" button in a bottom of the contents explanation screen C is operated, the selection of the contents is cancelled, and the display is back to the original "icon answer" screen B. The searching server SV receives selection cancellation information of the contents and confirms that the user terminal UT is back to the displaying step (Step C2) of the "icon search" screen B.

When the purchase instruction information is transmitted from the user terminal UT, the searching server SV reads the contents selected on the user terminal UT from the contents file SVd4 based on the contents ID corresponding to the purchase instruction information to transmit to the user terminal UT. Also, the searching server SV executes a charging settlement process referring to the charging information file SVd5 and the user information file SVd6 to decide a price to provide to the user of the contents and executes the charging settlement process to the user terminal UT or the user (Step S5). Then, data relating to the user terminal UT of the both files SVd5 and SVd6 is renewed by the results of these processes to finish the information searching process on the server side.

Further, when a charge for contents providing is executed, user authentication is indispensable. For example, it is preferable that identification of a user who desires to obtain contents is executed by executing the user authentication before entering the "icon search" screen A, before entering the contents explanation screen C and/or after requesting purchase of contents on the contents explanation screen C, user authentication is executed.

When charging, it may be by contents like 100 yen per music etc., or it may be charged at a fixed amount for 100 yen every month as download is possible up to three music. In the case of the latter, for example, in a case that a charge is the fixed amount up to 3 songs per month, when the purchases exceeding limit conditions is requested, a message that the download is impossible is preferably displayed, or an extra charge is preferably requested.

On the other hand, the user terminal UT obtains contents transmitted from the searching server SV to store in the storage device 2 (Step C8) and the information searching process is finished on the user side. On the user terminal UT side, contents stored in the storage device 2 can always be reproduced via the output device 4 depending on necessity.

The "icon search" screen A, the "icon answer" screen B and the contents explanation screen C can be arbitrary changed depending on necessity. For example, as for the "icon search" screen A, not only an icon IC is displayed, but a footnote comment CM corresponding to each icon IC may be displayed at the same time. Also, as for the "icon answer" screen B, the icon associated with each contents may be displayed at the same time.

FIG. 7A shows an "icon search" screen A' when the footnote is put down with the "icon search" screen A in FIG. 6A. In this example, plurality of icons are presented on the left side of the main display area CM, and the footnote comment CM corresponding to each icon IC on the right side. Short characteristic phrases that are common with contents belonging to each icon IC such as a "new song", a "movie soundtrack", "fashionable", a "love song", "heart breaking", "driving", "grooving", "danceable" and the like as shown in the drawing are used for footnote comment IC.

FIG. 7B shows an "icon answer" screen B' when icons are displayed in the "icon answer" screen B in FIG. 6B. In this example, following to the contents guidance information (theme of xyz/xyz, etc.) CP, icons IC represented with groups ("soundtrack music" and the like) to which the contents are belonging with image is added.

Further, in this case, when the contents represented with contents guidance information is belonging to plurality of groups, plurality of icons corresponding to these groups are displayed. In an example of FIG. 7B, "xyz chorus/xyz" of a reference number "2" is associated with two icons, "MOVIE soundtrack" icon IC1 and "drive" icon IC2, and it is represented belonging to both of these groups.

Also, as for contents explanation screen C in FIG. 6c as same as the "icon answer" screen B', icons associated with the contents may be displayed on appropriate positions in the main display area MA in addition to the explanations of contents (not shown in the drawing).

Moreover, in a case that there is an amount that cannot be displayed in a screen, any screens can be configured to have plurality of pages just like the "icon answer" screens B and B'.

According to the above-described embodiment of the present invention, vague information can be searched comprehensively and efficiently comparing to searching with text information because icons associated with contents are displayed on a user terminal. That is, although in a case of searching with the text information, a plurality of searching with various keywords are needed to search vague information, the searching with icons like the above-described embodiment can reduce the number of searching.

Also, according to the above-described embodiment of the present invention, an icon represents a search condition; therefore, larger amount of information (concepts of the searching target) can be displayed on a small display comparing to text information. Further, a multiplicity of the concepts can be displayed on a display having a small area such as a display of a mobile phone, PDA, etc.

The present invention has been described in connection with the preferred embodiments. The invention is not limited only to the above embodiments. It is apparent that various modifications, improvements, combinations, and the like can be made by those skilled in the art.

For example, plurality of icons can be designated as for the searching, and a refined search (AND matrix) by icons and search (OR) for contents agreed with any of the plurality of icons may be executed. Also, a result of a logical calculation for information searched by icon and text may be displayed by using the above described "icon based searching together with the conventional "text based".

In a case of music information, either MIDI or similar note specified music data or waveform recorded audio data may be used as contents to be searched. Also, any music information for an arbitral usage such as a ringer melody for a phone and a karaoke song are included. Further, the contents to be searched are not only music information, but also may be voice information, picture information, text data or combination of them.

As for the icons, however it is explained as a still picture in the embodiment, it may be a moving picture (for example, a moving picture representing "rotating a reel of cine-projector" / "scene of breaking a heart" as icons corresponding to "movie soundtrack" and "heart breaking". Also, sound corresponding to icons (for example, a sound of rotating a reel and "sound of breaking something") may be generated when icon is selected.

## Claims

1. An information searching method for an information searching apparatus connected to a user terminal via a communication network, the information searching method comprising the steps of:
(a) presenting a plurality of icons to the user terminal;
(b) receiving a selection of an icon from the plurality of icons by a user from the user terminal;
(c) searching contents associated with the selected icon in accordance with the selected icon; and
(d) guiding the contents by providing information relating to the searched contents to the user terminal.

2. An information searching method according to claim 1, wherein said step (a) further presents footnote information relating to the plurality of icons together with the plurality of icons.

3. An information searching method according to claim 1, wherein each of the contents is associated with one icon or a plurality of icons.

4. An information searching method according to claim 1, wherein
said information searching apparatus comprises a database for storing at least icon information including icon ID, contents information including contents ID and index information including the icon ID and the contents ID,
said selected icon includes the icon ID, and
said step (c) searches the contents in accordance with the icon ID included in the received selected icon by using the index information.

5. A storage medium storing an information searching program for an information searching apparatus connected to a user terminal via a communication network, the information searching program comprising the instructions for:
(a) presenting a plurality of icons to the user terminal;
(b) receiving a selection of an icon from the plurality of icons by a user from the user terminal;
(c) searching contents associated with the selected icon in accordance with the selected icon; and
(d) guiding the contents by providing information relating to the searched contents to the user terminal.

6. An information searching apparatus connected to a user terminal via a communication network, the information searching apparatus comprising:
presenting means for presenting a plurality of icons to the user terminal;
receiving means for receiving a selection of an icon from the plurality of icons by a user from the user terminal;
searching means for searching contents associated with the selected icon in accordance with the selected icon; and
guiding means for guiding the contents by providing information relating to the searched contents to the user terminal.

7. An information searching apparatus according to claim 6, further comprising a database for storing at least icon information including icon ID, contents information including contents ID and index information including the icon ID and the contents ID, wherein
said selected icon includes the icon ID, and
said searching means searches the contents in accordance with the icon ID included in the received selected icon by using the index information.
